# FASCICULE DE BREVET EUROPEEN

(11) **EP 3 718 899 B1**
(45) Date de publication et mention de la délivrance du brevet: **23.02.2022**
(21) Numéro de dépôt: 20161076.3
(22) Date de dépôt: 05.03.2020
(51) Int. Cl.: B64D 27/26

(54) **ATTACHE MOTEUR ARRIÈRE D'UN AÉRONEF PRÉSENTANT UN ENCOMBREMENT RÉDUIT EN LARGEUR ET AÉRONEF COMPRENANT AU MOINS UNE TELLE ATTACHE MOTEUR ARRIÈRE**
HINTERE MOTORHALTERUNG MIT REDUZIERTER BREITE FÜR EIN FLUGZEUG UND FLUGZEUG MIT MINDESTENS EINER SOLCHEN HINTEREN MOTORHALTERUNG
REAR ENGINE MOUNT FOR AN AIRCRAFT HAVING A REDUCED WIDTH AND AIRCRAFT COMPRISING AT LEAST ONE SUCH REAR ENGINE MOUNT

(30) Priorité: 18.03.2019 FR 1902776
(43) Date de publication de la demande: 07.10.2020
(73) Titulaire: Airbus Operations SAS, 31060 Toulouse (FR)
(72) Inventeur: BERJOT, Michael, 31770 Colomiers (FR); CAYSSIALS, Julien, 31150 Gagnac sur Garonne (FR)
(74) Mandataire: Fantin, Laurent

(56) Documents cités:
- EP-A1- 0 583 158
- US-A- 4 725 019
- US-A1- 2016 122 029
- US-B2- 7 325 770

## Description

La présente demande se rapporte à une attache moteur arrière d'un aéronef présentant un encombrement réduit en largeur ainsi qu'à un aéronef comprenant au moins une telle attache moteur arrière.

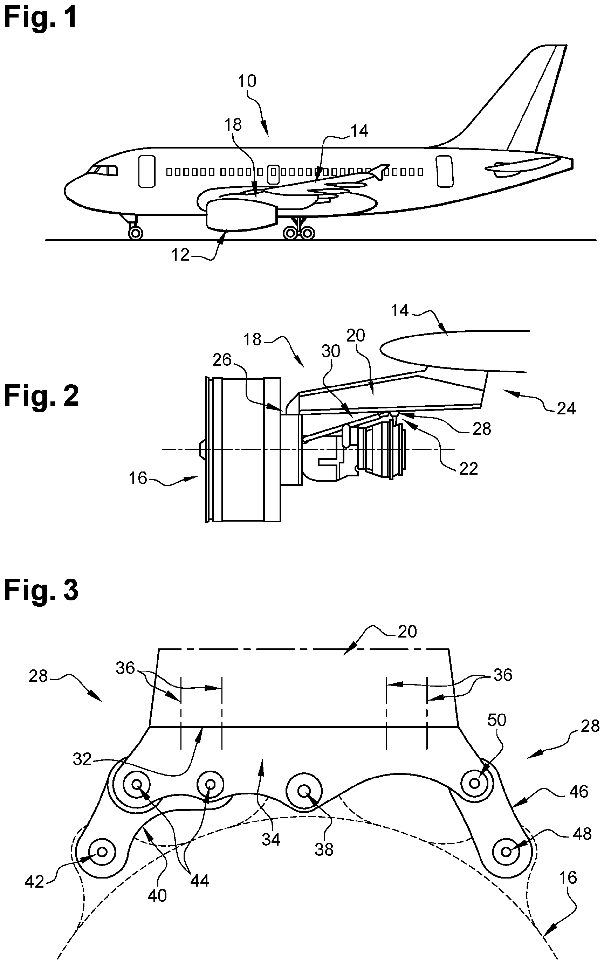

Selon un mode de réalisation visible sur les figures 1 et 2, un aéronef 10 comprend plusieurs ensembles propulseurs 12 positionnés sous chacune des ailes 14 de l'aéronef. Chaque ensemble propulseur 12 comprend un moteur 16, une nacelle (non représentée sur la figure 2) positionnée autour du moteur 16 ainsi qu'un mât 18 reliant le moteur 16 et l'aile 14. Le mât 18 comprend une structure primaire 20 qui est reliée au moteur 16 par une attache moteur 22 et à l'aile 14 par une attache voilure 24.

Pour la présente invention, une direction longitudinale est sensiblement parallèle à l'axe de rotation A16 du moteur. Un plan longitudinal vertical est un plan vertical passant par l'axe de rotation A16 du moteur. Un plan transversal est un plan perpendiculaire à l'axe de rotation A16 du moteur. Une direction transversale horizontale est une direction horizontale et perpendiculaire à l'axe de rotation A16 du moteur.

L'attache moteur 22 comprend une attache moteur avant 26, une attache moteur arrière 28 et un couple de bielles de poussée 30 assurant la reprise des efforts de poussée.

Selon un mode de réalisation visible sur la figure 3, pour l'attache moteur arrière 28, la structure primaire 20 comprend une semelle 32 positionnée approximativement dans un plan horizontal. L'attache moteur arrière 28 comprend une poutre transversale 34, reliée à la structure primaire 20 par des éléments de liaison 36 et au moteur 16 par un axe de liaison moteur central 38, une première biellette 40 reliée au moteur 16 par un premier axe de liaison moteur latéral 42 et à la poutre transversale 34 par deux axes de liaison poutre 44 ainsi qu'une deuxième biellette 46 reliée au moteur par un deuxième axe de liaison moteur latéral 48 et à la poutre transversale 34 par un axe de liaison poutre 50.

Les axes de liaison 38, 42, 44, 48, 50 sont sensiblement parallèles entre eux et à la direction longitudinale.

Selon ce mode de réalisation, la première biellette 40 assure la reprise des efforts de tension/compression et du couple moteur. La deuxième biellette 46 assure la reprise des efforts de tension/compression.

Les première et deuxième biellettes 40, 46 sont reliées à la poutre transversale 34 par trois axes de liaison poutre 44, 50 espacés, approximativement alignés avec l'axe de liaison moteur central 38 selon une direction transversale horizontale. Cet agencement conduit à un encombrement important selon la direction transversale. Ainsi, la partie inférieure de la structure primaire présente une largeur importante pénalisant les performances aérodynamiques du mât 18.

Le document US4725019 décrit, selon un mode de réalisation visible sur la figure 16, une attache moteur arrière qui comprend un support transversal oscillant relié au mât par un axe transversal pivotant ainsi qu'une platine reliée au support par un système limitant la propagation des vibrations. Cette platine est reliée également à une patte de fixation située à droite du moteur ainsi qu'à une biellette qui est reliée à une patte de fixation située à gauche du moteur. Comme précédemment, cet agencement conduit à un encombrement important selon la direction transversale.

La présente invention vise à remédier à tout ou partie des inconvénients de l'art antérieur.

A cet effet, l'invention a pour objet une attache moteur arrière d'aéronef reliant une structure primaire et un moteur d'un aéronef, ladite attache moteur arrière comprenant un support configuré pour être relié à la structure primaire, au moins une patte de fixation centrale solidaire du moteur, au moins une première patte de fixation latérale solidaire du moteur, au moins une deuxième patte de fixation latérale solidaire du moteur, les première et deuxième pattes de fixation latérales étant disposées de part et d'autre de la patte de fixation centrale, une biellette principale reliée au support par des premier et deuxième axes de liaison support et à la première patte de fixation latérale par un premier axe de liaison moteur latéral, les premier et deuxième axes de liaison support étant positionnés de manière symétrique par rapport à un plan longitudinal vertical, une première biellette secondaire reliée à la deuxième patte de fixation latérale par un deuxième axe de liaison moteur latéral et à la biellette principale par un axe de liaison secondaire.

Selon l'invention, la biellette principale est reliée à la patte de fixation centrale par un axe de liaison moteur central positionné au niveau du plan longitudinal vertical. En complément, l'attache moteur arrière comprend deux âmes parallèles entre elles, entre lesquelles est positionnée la biellette principale, une deuxième biellette secondaire parallèles à la première biellette secondaire, les première et deuxième biellettes secondaires étant espacées entre elles et disposées de part et d'autre de la biellette principale, deux pattes de fixation centrales parallèles entre elles, espacées et disposées de part et d'autre de la biellette principale, deux premières pattes de fixation latérales parallèles entre elles, espacées et disposées de part et d'autre de la biellette principale ainsi qu'une unique deuxième patte de fixation latérale positionnée entre les biellettes secondaires.

Selon l'invention, l'attache moteur arrière ne comprend que deux axes de liaison support alignés selon une direction transversale horizontale. De ce fait, l'attache arrière moteur est plus compacte selon une direction transversale, au niveau de la base de la structure primaire, ce qui permet de réduire la largeur du mât et donc d'améliorer les performances aérodynamiques.

Selon une autre caractéristique, le support comprend au moins une platine, présentant une surface d'appui configurée pour être plaquée contre la structure primaire et des orifices traversant pour loger des éléments de liaison, ainsi que deux âmes, réalisées d'un seul tenant avec la platine et positionnées chacune dans un plan approximativement transversal, présentant des premier et deuxième trous de passage pour les premier et deuxième axes de liaison support.

Selon une autre caractéristique, chaque biellette principale se présente sous la forme d'une plaque positionnée approximativement dans un plan transversal et comprend cinq orifices parmi lesquels des premier et deuxième orifices pour loger les premier et deuxième axes de liaison support, un troisième orifice pour loger l'axe de liaison moteur central, un quatrième orifice pour loger le premier axe de liaison moteur latéral et un cinquième orifice pour loger l'axe de liaison secondaire.

Selon une autre caractéristique, chaque biellette principale comprend une partie centrale approximativement triangulaire avec trois sommets arrondis au niveau desquels sont positionnés les premier, deuxième et troisième orifices ; un premier prolongement long à une extrémité libre duquel est positionné le quatrième orifice, ainsi qu'un deuxième prolongement court à une extrémité libre duquel est positionné le cinquième orifice.

Selon une autre caractéristique, chaque biellette secondaire se présente sous la forme d'une plaque, positionnée approximativement dans un plan transversal, de forme oblongue comportant des première et deuxième extrémités arrondies au niveau desquelles sont positionnés des premier et deuxième trous pour loger le deuxième axe de liaison moteur latéral et l'axe de liaison secondaire.

Selon une autre caractéristique, les premier et deuxième axes de liaison support intègrent chacun une liaison rotule pour permettre un débattement du moteur.

Selon une autre caractéristique, les premier et deuxième axes de liaison moteur latéraux intègrent chacun une liaison rotule pour permettre un débattement du moteur.

L'invention a également pour objet un aéronef comprenant au moins une attache moteur arrière selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une vue latérale d'une motorisation,
- La figure 3 est une vue de face d'une attache moteur arrière qui illustre un mode de réalisation de l'art antérieur,
- La figure 4 est une vue latérale d'une attache moteur arrière qui illustre un mode de réalisation de l'invention,
- La figure 5 est une vue en perspective de l'attache moteur arrière visible sur la figure 4,
- La figure 6 est une vue en perspective d'une attache moteur arrière, et
- La figure 7 est une vue en perspective en éclaté de l'attache moteur arrière visible sur la figure 6.

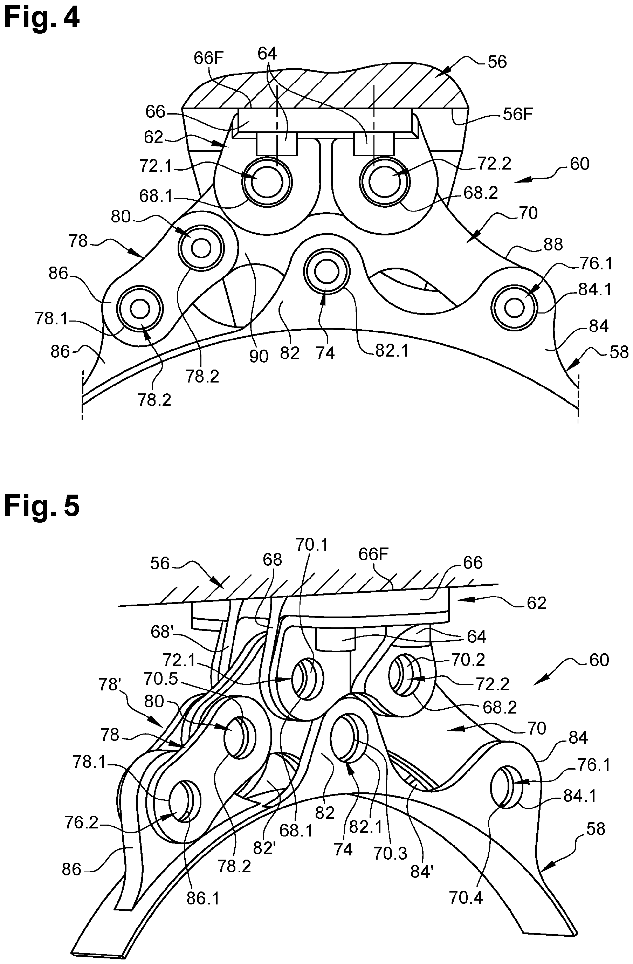

Sur les figures 4 à 7, on a représenté une structure primaire 56 d'un aéronef reliée à un moteur 58 par une attache moteur arrière 60.

Selon une configuration, la structure primaire 56 comprend une semelle 56F sensiblement plane pour solidariser l'attache moteur arrière 60.

L'attache moteur arrière 60 comprend un support 62 relié à la structure primaire 56 par des éléments de liaison 64 à la structure primaire 56. Ce support 62 comprend au moins une platine 66 qui présente une surface d'appui 66F plaquée contre la semelle 56F de la structure primaire 56 et des orifices traversant pour loger les éléments de liaison 64 ; ainsi qu'au moins une âme 68, réalisée d'un seul tenant avec la platine 66, positionnée dans un plan approximativement transversal.

L'attache moteur arrière 60 comprend au moins une biellette principale 70, sous la forme d'une plaque (ou de plusieurs plaques plaquées les unes contre les autres), positionnée approximativement dans un plan transversal, reliée à l'âme 68 par des premier et deuxième axes de liaison support 72.1, 72.2 ainsi qu'au moteur 58 par un axe de liaison moteur central 74 et par un premier axe de liaison moteur latéral 76.1.

Le fait que l'axe de liaison moteur central 74 soit relié à la biellette principale 70 et non au support 62 contribue à réduire l'encombrement selon la direction transversale.

L'attache moteur arrière 60 comprend au moins une biellette secondaire 78, sous la forme d'une plaque positionnée approximativement dans un plan transversal, reliée à la biellette principale 70 par un axe de liaison secondaire 80 et au moteur 58 par un deuxième axe de liaison moteur latéral 76.2.

Les premier et deuxième axes de liaison support 72.1, 72.2, l'axe de liaison moteur central 74, les premier et deuxième axes de liaison moteur latéraux 76.1, 76.2 et l'axe de liaison secondaire 80 sont parallèles entre eux et orientés selon une direction approximativement parallèle à la direction longitudinale.

Les premier et deuxième axes de liaison support 72.1, 72.2 sont positionnés de manière symétrique par rapport au plan longitudinal vertical.

L'âme 68 du support 62 comprend des premier et deuxième trous de passage 68.1, 68.2 respectivement pour les premier et deuxième axes de liaison support 72.1, 72.2. Chaque biellette principale 70 comprend des premier et deuxième orifices 70.1, 70.2 pour loger les premier et deuxième axes de liaison support 72.1, 72.2. Les premier et deuxième axes de liaison support 72.1, 72.2 intègrent chacun une liaison rotule pour permettre un débattement du moteur 58. Les premier et deuxième axes de liaison support 72.1, 72.2 ne sont pas plus décrits car ils peuvent être identiques aux axes de liaison poutre 44, 50 de l'art antérieur.

L'axe de liaison moteur central 74 est positionné au niveau du plan longitudinal vertical. Les premier et deuxième axes de liaison moteur latéraux 76.1, 76.2 sont positionnés de manière symétrique par rapport au plan longitudinal vertical.

Le moteur 58 comprend au moins une patte de fixation centrale 82, positionnée dans un plan transversal, qui présente un trou de passage 82.1 pour loger l'axe de liaison moteur central 74. L'axe de liaison moteur central 74 est positionné au niveau du plan longitudinal vertical.

Chaque biellette principale 70 comprend un troisième orifice 70.3 pour loger l'axe de liaison moteur central 74.

L'axe de liaison moteur central 74 n'est pas plus décrit car il peut être identique à l'axe de liaison moteur central 38 de l'art antérieur.

Le moteur 58 comprend au moins une première patte de fixation latérale 84, positionnée dans un plan transversal, qui présente un premier trou de passage 84.1 pour loger le premier axe de liaison moteur latéral 76.1. Chaque biellette principale 70 comprend un quatrième orifice 70.4 pour loger le premier axe de liaison moteur latéral 76.1.

Le moteur 58 comprend au moins une deuxième patte de fixation latérale 86, positionnée dans un plan transversal, qui présente un deuxième trou de passage 86.1 pour loger le deuxième axe de liaison moteur latéral 76.2. Chaque biellette secondaire 78 comprend un premier trou 78.1 pour loger le deuxième axe de liaison moteur latéral 76.2.

Les premier et deuxième trous de passage 84.1, 86.2 sont positionnés de sorte que les premier et deuxième axes de liaison moteur latéraux 76.1, 76.2 soient disposés de manière symétrique par rapport au plan longitudinal vertical.

Les premier et deuxième axes de liaison moteur latéraux 76.1, 76.2 intègrent chacun une liaison rotule pour permettre un débattement du moteur 58. Les premier et deuxième axes de liaison moteur latéraux 76.1, 76.2 ne sont pas plus décrits car ils peuvent être identiques aux premier et deuxième axes de liaison moteur latéraux 42, 48 de l'art antérieur.

Chaque biellette principale 70 comprend un cinquième orifice 70.5 pour loger l'axe de liaison secondaire 80. Chaque biellette secondaire 78 comprend un deuxième trou 78.2 pour loger l'axe de liaison secondaire 80.

Selon une configuration, l'axe de liaison secondaire 80 est identique au deuxième axe de liaison moteur latéral 76.2.

Selon un mode de réalisation, chaque biellette secondaire 78 a une forme oblongue qui présente des première et deuxième extrémités arrondies au niveau desquelles sont positionnés les premier et deuxième trous 78.1, 78.2.

Chaque biellette principale 70 comprend une partie centrale approximativement triangulaire avec trois sommets arrondis au niveau desquels sont positionnés les premier, deuxième et troisième orifices 70.1 à 70.3 ; un premier prolongement 88 long à une extrémité libre duquel est positionné le quatrième orifice 70.4 ; ainsi qu'un deuxième prolongement 90 court à une extrémité libre duquel est positionné le cinquième orifice 70.5.

Selon l'invention, en référence aux figures 4 et 5, l'attache moteur arrière 60 comprend deux âmes 68, 68' parallèles entre elles et espacées, une unique biellette principale 70 positionnée entre les deux âmes 68, 68', deux biellettes secondaires 78, 78' parallèles entre elles, espacées et disposées de part et d'autre de la biellette principale 70, deux pattes de fixation centrales 82, 82' parallèles entre elles, espacées et disposées de part et d'autre de la biellette principale 70, deux premières pattes de fixation latérales 84, 84' parallèles entre elles, espacées et disposées de part et d'autre de la biellette principale 70 ainsi qu'une unique deuxième patte de fixation latérale 86 positionnée entre les biellettes secondaires 78, 78'.

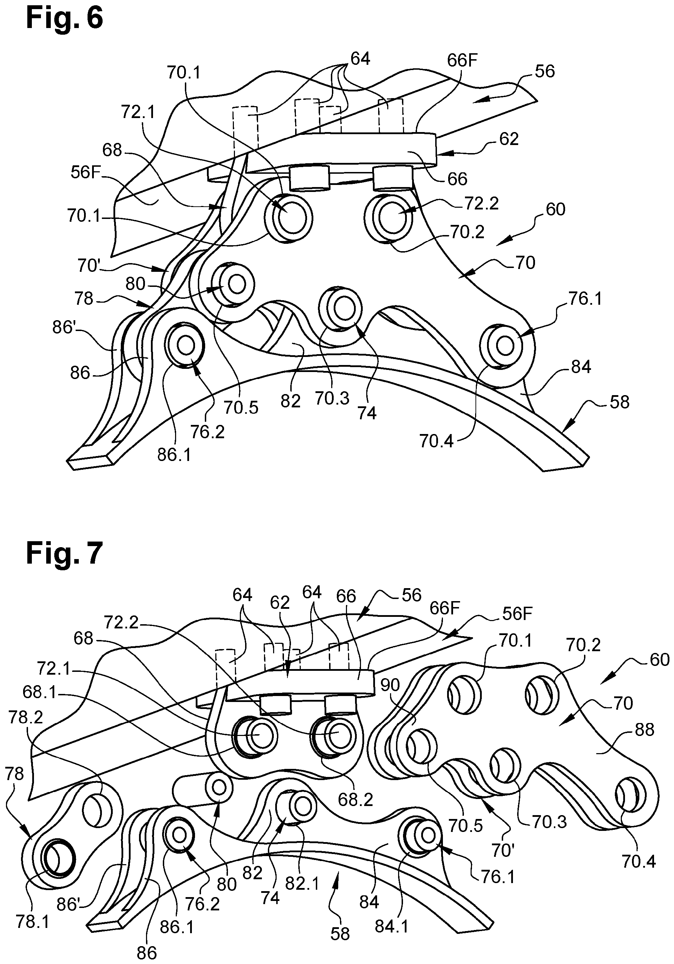

Selon un mode de réalisation non revendiqué, visible sur les figures 6 et 7, l'attache moteur arrière 60 comprend une unique âme 68, deux biellettes principales 70, 70' parallèles entre elles, espacées et disposées de part et d'autre de l'âme 68, une unique biellette secondaire 78 intercalée entre les deux biellettes principales 70, 70', une unique patte de fixation centrale 82 intercalée entre les deux biellettes principales 70, 70', une unique première patte de fixation latérale 84 intercalée entre les deux biellettes principales 70, 70' ainsi que deux deuxièmes pattes de fixation latérales 86, 86', parallèles entre elles, espacées et disposées de part et d'autre de la biellette secondaire 78.

Quel que soit le mode de réalisation, le moteur 58, plus particulièrement son carter, présente des pattes de fixation centrales et latérales dissymétriques ; le moteur 58 comprenant soit une unique patte de fixation centrale 82, une unique première patte de fixation latérale 84 et deux deuxièmes pattes de fixation latérales 86 soit deux deuxièmes pattes de fixation centrales 82, 82', deux premières pattes de fixation latérales 84, 84' et une unique deuxième patte de fixation latérale 86.

Contrairement à l'art antérieur qui prévoit trois axes de liaison alignés selon une direction transversale horizontale sous la structure primaire 56, l'attache moteur arrière de l'invention ne prévoit que deux axes de liaison support 72.1, 72.2 alignés selon une direction transversale horizontale. Ainsi, l'attache arrière moteur 60 est plus compacte selon une direction transversale, au niveau de la base de la structure primaire 56, ce qui permet de réduire la largeur du mât et donc d'améliorer les performances aérodynamiques.

## Revendications

1. Attache moteur arrière d'aéronef reliant une structure primaire (56) et un moteur (58) d'un aéronef, ladite attache moteur arrière comprenant un support (62) configuré pour être relié à la structure primaire (56), au moins une patte de fixation centrale (82) solidaire du moteur (58), au moins une première patte de fixation latérale (84) solidaire du moteur (58), au moins une deuxième patte de fixation latérale (86) solidaire du moteur (58), les première et deuxième pattes de fixation latérales (84, 86) étant disposées de part et d'autre de la patte de fixation centrale (82), une biellette principale (70) reliée au support (62) par des premier et deuxième axes de liaison support (72.1, 72.2) et à la première patte de fixation latérale (84) par un premier axe de liaison moteur latéral (76.1), les premier et deuxième axes de liaison support (72.1, 72.2) étant positionnés de manière symétrique par rapport à un plan longitudinal vertical, une première biellette secondaire (78) reliée à la deuxième patte de fixation latérale (86) par un deuxième axe de liaison moteur latéral (76.2) et à la biellette principale (70) par un axe de liaison secondaire (80), **caractérisée en ce que** la biellette principale (70) est reliée à la patte de fixation centrale (82) par un axe de liaison moteur central (74) positionné au niveau du plan longitudinal vertical, **en ce que** l'attache moteur arrière comprend deux âmes (68, 68') parallèles entre elles, entre lesquelles est positionnée la biellette principale (70), une deuxième biellette secondaire (78') parallèles à la première biellette secondaire (78), les première et deuxième biellettes secondaires (78, 78') étant espacées entre elles et disposées de part et d'autre de la biellette principale (70), deux pattes de fixation centrales (82, 82') parallèles entre elles, espacées et disposées de part et d'autre de la biellette principale (70), deux premières pattes de fixation latérales (84, 84') parallèles entre elles, espacées et disposées de part et d'autre de la biellette principale (70) ainsi qu'une unique deuxième patte de fixation latérale (86) positionnée entre les biellettes secondaires (78, 78').

2. Attache moteur arrière d'aéronef selon la revendication 1, **caractérisée en ce que** le support (62) comprend au moins une platine (66) présentant une surface d'appui (66F) configurée pour être plaquée contre la structure primaire (56) et des orifices traversant pour loger des éléments de liaison (64) ainsi que deux âmes (68, 68'), réalisées d'un seul tenant avec la platine (66), positionnées chacune dans un plan approximativement transversal, présentant des premier et deuxième trous de passage (68.1, 68.2) pour les premier et deuxième axes de liaison support (72.1, 72.2).

3. Attache moteur arrière d'aéronef selon l'une des revendications précédentes, **caractérisée en ce que** la biellette principale (70) se présente sous la forme d'une plaque positionnée approximativement dans un plan transversal et comprend cinq orifices (70.1 à 70.5) parmi lesquels des premier et deuxième orifices (70.1, 702) pour loger les premier et deuxième axes de liaison support (72.1, 72.2), un troisième orifice (70.3) pour loger l'axe de liaison moteur central (74), un quatrième orifice (70.4) pour loger le premier axe de liaison moteur latéral (76.1) et un cinquième orifice (70.5) pour loger l'axe de liaison secondaire (80).

4. Attache moteur arrière d'aéronef selon la revendication précédente, **caractérisée en ce que** la biellette principale (70) comprend une partie centrale approximativement triangulaire avec trois sommets arrondis au niveau desquels sont positionnés les premier, deuxième et troisième orifices (70.1 à 70.3), un premier prolongement (88) long à une extrémité libre duquel est positionné le quatrième orifice (70.4), ainsi qu'un deuxième prolongement (90) court à une extrémité libre duquel est positionné le cinquième orifice (70.5).

5. Attache moteur arrière d'aéronef selon l'une des revendications précédentes, **caractérisée en ce que** chaque biellette secondaire (78) se présente sous la forme d'une plaque, positionnée approximativement dans un plan transversal, de forme oblongue comportant des première et deuxième extrémités arrondies au niveau desquelles sont positionnés des premier et deuxième trous (78.1, 78.2) pour loger le deuxième axe de liaison moteur latéral (76.2) et l'axe de liaison secondaire (80).

6. Attache moteur arrière d'aéronef selon l'une des revendications précédentes, **caractérisée en ce que** les premier et deuxième axes de liaison support (72.1, 72.2) intègrent chacun une liaison rotule pour permettre un débattement du moteur (58).

7. Attache moteur arrière d'aéronef selon l'une des revendications précédentes, **caractérisée en ce que** les premier et deuxième axes de liaison moteur latéraux (76.1, 76.2) intègrent chacun une liaison rotule pour permettre un débattement du moteur (58).

8. Aéronef comprenant au moins une attache moteur arrière selon l'une des revendications précédentes.

## Patentansprüche

1. Rückseitige Motorbefestigung für ein Luftfahrzeug, die eine Primärstruktur (56) und einen Motor (58) eines Luftfahrzeugs verbindet, wobei die rückseitige Motorbefestigung einen Träger (62), der dazu eingerichtet ist, mit der Primärstruktur (56) verbunden zu sein, wenigstens eine fest mit dem Motor (58) verbundene mittlere Befestigungslasche (82), wenigstens eine fest mit dem Motor (58) verbundene erste seitliche Befestigungslasche (84) und wenigstens eine mit dem Motor (58) fest verbundene zweite seitliche Befestigungslasche (86) umfasst, wobei die erste und zweite seitliche Befestigungslaschen (84, 86) beidseits der mittleren Befestigungslasche (82) angeordnet sind, und einen Hauptlenker (70) umfasst, der mit dem Träger (62) durch erste und zweite Trägerverbindungsachsen (72.1, 72.2) und mit der ersten seitlichen Befestigungslasche (84) durch eine erste seitliche Motorverbindungsachse (76.1) verbunden ist, wobei die erste und zweite Trägerverbindungsachse (72.1, 72.2) symmetrisch zu einer vertikalen Längsebene angeordnet sind, sowie einen ersten Nebenlenker (78) umfasst, der mit der zweiten seitlichen Befestigungslasche (86) durch eine zweite seitliche Motorverbindungsachse (76.2) und mit dem Hauptlenker (70) durch eine Nebenverbindungsachse (80) verbunden ist, **dadurch gekennzeichnet, dass** der Hauptlenker (70) mit der mittleren Befestigungslasche (82) durch eine im Bereich der vertikalen Längsebene angeordnete mittlere Motorverbindungsachse (74) verbunden ist, und dass die rückseitige Motorbefestigung zwei zueinander parallele Stege (68, 68'), zwischen denen der Hauptlenker (70) angeordnet ist, einen zum ersten Nebenlenker (78) parallelen zweiten Nebenlenker (78'), wobei der erste und der zweite Nebenlenker (78, 78') im Abstand und beidseits des Hauptlenkers (70) angeordnet sind, zwei zueinander parallele mittlere Befestigungslaschen (82, 82'), die im Abstand und beiderseits des Hauptlenkers (70) angeordnet sind, zwei zueinander parallele erste seitliche Befestigungslaschen (84, 84'), die im Abstand und beidseits des Hauptlenkers (70) angeordnet sind, sowie eine einzige zweite seitliche Befestigungslasche (86) umfasst, die zwischen den Nebenlenkern (78, 78') angeordnet ist.

2. Rückseitige Motorbefestigung für ein Luftfahrzeug nach Anspruch 1, **dadurch gekennzeichnet, dass** der Träger (62) wenigstens eine Platte (66) mit einer Auflagefläche (66F) aufweist, die zum Andrücken gegen die Primärstruktur (56) eingerichtet ist, und Durchgangsöffnungen zur Aufnahme von Verbindungselemente (64) sowie zwei einstückig mit der Platte (66) hergestellte Stege (68, 68') aufweist, die jeweils näherungsweise in einer Querebene angeordnet sind und die erste und zweite Durchgangslöcher (68.1, 68.2) für die erste und zweite Trägerverbindungsachsen (72.1, 72.2) aufweisen.

3. Rückseitige Motorbefestigung für ein Luftfahrzeug nach einem der vorhergehenden Ansprüche, **dadurch gekennzeichnet, dass** der Hauptlenker (70) die Form einer näherungsweise in einer Querebene angeordneten Platte aufweist und fünf Öffnungen (70.1 bis 70.5) umfasst, darunter die erste und zweite Öffnung (70.1, 70.2) zur Aufnahme der ersten und zweiten Trägerverbindungsachse (72.1, 72.2), eine dritte Öffnung (70.3) zur Aufnahme der mittleren Motorverbindungsachse (74), eine vierte Öffnung (70.4) zur Aufnahme der ersten seitlichen Motorverbindungsachse (76.1) und eine fünfte Öffnung (70.5) zur Aufnahme der Nebenverbindungsachse (80).

4. Rückseitige Motorbefestigung für ein Luftfahrzeug nach dem vorhergehenden Anspruch, **dadurch gekennzeichnet, dass** der Hauptlenker (70) ein näherungsweise dreieckiges Mittelteil mit drei abgerundeten Ecken, in deren Bereich die erste, zweite und dritte Öffnung (70.1 bis 70.3) angeordnet sind, eine erste lange Verlängerung (88), an deren freiem Ende die vierte Öffnung (70.4) angeordnet ist, sowie eine zweite kurze Verlängerung (90) aufweist, an deren freien Ende die fünfte Öffnung (70.5) angeordnet ist.

5. Rückseitige Motorbefestigung für ein Luftfahrzeug nach einem der vorhergehenden Ansprüche, **dadurch gekennzeichnet, dass** jeder Nebenlenker (78) als Platte ausgebildet ist, die näherungsweise in einer Querebene angeordnet und länglich ausgebildet ist und erste und zweite abgerundete Enden aufweist, in deren Bereich ein erstes und ein zweites Loch (78.1, 78.2) angeordnet sind, um die zweite seitliche Motorverbindungsachse (76.2) und die Nebenverbindungsachse (80) aufzunehmen.

6. Rückseitige Motorbefestigung für ein Luftfahrzeug nach einem der vorhergehenden Ansprüche, **dadurch gekennzeichnet, dass** die erste und zweite Trägerverbindungsachse (72.1, 72.2) jeweils ein Kugelgelenkverbindung aufweisen, um eine Bewegung des Motors (58) zu ermöglichen.

7. Rückseitige Motorbefestigung für ein Luftfahrzeug nach einem der vorhergehenden Ansprüche, **dadurch gekennzeichnet, dass** die erste und zweite seitliche Motorverbindungsachsen (76.1, 76.2) jeweils eine Kugelgelenkverbindung umfassen, um eine Bewegung des Motors (58) zu ermöglichen.

8. Luftfahrzeug mit wenigstens einer rückseitige Motorbefestigung nach einem der vorhergehenden Ansprüche.

## Claims

1. Aircraft rear engine attachment connecting a primary structure (56) and an engine (58) of an aircraft, said rear engine attachment comprising a support (62) configured to be connected to the primary structure (56), at least one central fastening tab (82) as one with the engine (58), at least one first lateral fastening tab (84) as one with the engine (58), at least one second lateral fastening tab (86) as one with the engine (58), the first and second lateral fastening tabs (84, 86) being disposed on either side of the central fastening tab (82), a main connecting rod (70) connected to the support (62) by first and second support link pins (72.1, 72.2) and to the first lateral fastening tab (84) by a first lateral engine link pin (76.1), the first and second support link pins (72.1, 72.2) being positioned symmetrically with respect to a vertical longitudinal plane, a first secondary connecting rod (78) connected to the second lateral fastening tab (86) by a second lateral engine link pin (76.2) and to the main connecting rod (70) by a secondary link pin (80), **characterized in that** the main connecting rod (70) is connected to the central fastening tab (82) by a central engine link pin (74) positioned in the vertical longitudinal plane, **in that** the rear engine attachment comprises two webs (68, 68') that are parallel to each other, between which is positioned the main connecting rod (70), a second secondary connecting rod (78') parallel to the first secondary connecting rod (78), the first and second secondary connecting rods (78, 78') being spaced apart and disposed on either side of the main connecting rod (70), two central fastening tabs (82, 82') that are parallel to each other, spaced apart and disposed on either side of the main connecting rod (70), two first lateral fastening tabs (84, 84') that are parallel to each other, spaced apart and disposed on either side of the main connecting rod (70), and a single second lateral fastening tab (86) positioned between the secondary connecting rods (78, 78').

2. Aircraft rear engine attachment according to Claim 1, **characterized in that** the support (62) comprises at least one mounting plate (66) having a bearing surface (66F) configured to be pressed against the primary structure (56) and through-orifices for housing link elements (64), and two webs (68, 68'), produced as a single piece with the mounting plate (66), each positioned in an approximately transverse plane, having first and second passage holes (68.1, 68.2) for the first and second support link pins (72.1, 72.2).

3. Aircraft rear engine attachment according to either of the preceding claims, **characterized in that** the main connecting rod (70) is in the form of a plate approximately positioned in a transverse plane and comprises five orifices (70.1 to 70.5), including first and second orifices (70.1, 70.2) for housing the first and second support link pins (72.1, 72.2), a third orifice (70.3) for housing the central engine link pin (74), a fourth orifice (70.4) for housing the first lateral engine link pin (76.1) and a fifth orifice (70.5) for housing the secondary link pin (80).

4. Aircraft rear engine attachment according to the preceding claim, **characterized in that** the main connecting rod (70) comprises an approximately triangular central part with three rounded vertices at which the first, second and third orifices (70.1 to 70.3) are positioned, a first, long extension (88) at a free end of which the fourth orifice (70.4) is positioned, and a second, short extension (90) at a free end of which the fifth orifice (70.5) is positioned.

5. Aircraft rear engine attachment according to one of the preceding claims, **characterized in that** each secondary connecting rod (78) is in the form of a plate, approximately positioned in a transverse plane, of oblong shape comprising first and second rounded ends at which first and second holes (78.1, 78.2) are positioned for housing the second lateral engine link pin (76.2) and the secondary link pin (80).

6. Aircraft rear engine attachment according to one of the preceding claims, **characterized in that** the first and second support link pins (72.1, 72.2) each integrate a ball joint link for allowing movement of the engine (58).

7. Aircraft rear engine attachment according to one of the preceding claims, **characterized in that** the first and second lateral engine link pins (76.1, 76.2) each integrate a ball joint link for allowing movement of the engine (58).

8. Aircraft comprising at least one rear engine attachment according to one of the preceding claims.
